# EUROPEAN PATENT APPLICATION

(11) **EP 4 811 175 A1**
(43) Date of publication of application: **23.09.2026**
(21) Application number: 26157316.6
(22) Date of filing: 09.02.2026
(51) Int. Cl.: G06F 16/9032, G06F 40/30

(54) **METHOD AND SYSTEM FOR ENHANCING LARGE LANGUAGE MODEL (LLM) UTILITY WITH CONTEXT-SPECIFIC TARGETED GENERATIVE MODELS**

(30) Priority: 11.02.2025 US 202519050942
(71) Applicant: Mitel Networks Corporation, Ottawa, Ontario K2K 3K1 (CA)
(72) Inventor: Murthy, Tejas, 56008 Bangalore (IN); Radhakrishnan, Jayachandran, 560035 Bengaluru (IN); Naidoo, Logendra, Ottawa, K1S 0W8 (CA)
(74) Representative: McDougall, James

(57) **Abstract**

Systems and methods including one or more processors and one or more non-transitory storage devices storing computing instructions configured to run on the one or more processors and perform acts of capturing data from an event; after conclusion of the event, isolating the captured data; analyzing the isolated data to determine one or more categories for the isolated data; extracting one or more facts from the data based on relevance to the event and accuracy; concatenating the one or more facts into knowledge units; grouping related knowledge units based on the one or more determined categories; and creating and training the targeted generative model using the knowledge units, wherein the targeted generative model is trained and operates within a secure, isolated environment, restricted to event-specific data, and while leveraging generative model infrastructure. Other embodiments are disclosed herein.

## Description

### TECHNICAL FIELD

This disclosure relates generally to large language models (LLMs) and more particularly to methods and systems for creating context-specific micro Generative Pre-trained Transformers (GPTs).

### BACKGROUND

Existing, standard LLMs like general-purpose GPTs are designed to handle a broad range of topics across extensive knowledge domains. While this on-demand versatility is valuable for general purposes, it poses limitations when applied to specialized contexts, such as business meetings focused on specific projects or involving particular groups of participants. These generalized models struggle with the high level of specificity and contextual sensitivity required to effectively manage and utilize detailed, localized information. GPTs often fail to provide immediate access to relevant facts, cannot isolate and encapsulate knowledge specific to a single meeting or event, and do not recall or summarize specific discussions accurately on demand.

The expansive and generalist nature of standard LLMs' knowledge ushers in inefficiencies and complexities when applied to confined, specialized discussions. For example, the demand for computational resources required to process vast arrays of data congests leading to latent response times and less precise answers that do not address the nuances of tightly scoped discussions. This inefficiency is exacerbated by the extraordinary computing power necessary to maintain and operate these large models, especially when they are employed for relatively simple queries, such as sports summaries or routine business meeting details. Such extensive use of resources raises concerns not only about operational cost and environmental impact but also about the scalability of using such heavy-duty frameworks for lightweight applications.

There is also a risk related to data security and privacy, as standard LLMs integrate and store public information from various sources, potentially violating corporate data security policies by inadequately segregating sensitive business information.

Therefore, there is a need for improved methods and systems to provide a tailored and secure generative model.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements and wherein:
FIG. 1 is a block diagram of a system according to aspects of this disclosure;
FIG. 2 is a flowchart of a method for creating and storing a targeted generative model for generating text relevant to a specific context according to aspects of this disclosure;
FIG. 3 is a flowchart for creating and querying a targeted generative model for generating text relevant to a specific context according to aspects of this disclosure;
FIG. 4 is a flowchart for creating a targeted generative model for generating text relevant to a specific context within a meeting framework according to aspects of this disclosure; and
FIG. 5 illustrates a representative block diagram of a computer system, according to an embodiment.

It will be appreciated that elements in the figures are illustrated for simplicity and clarity and have not necessarily been drawn to scale. For example, the dimensions of some of the elements in the figures may be exaggerated relative to other elements to help to improve understanding of illustrated embodiments of the present invention.

### DETAILED DESCRIPTION

The description of exemplary embodiments of the present invention provided herein is merely exemplary and is intended for purposes of illustration only; the following description is not intended to limit the scope of the invention as claimed. Moreover, recitation of multiple embodiments having stated features is not intended to exclude other embodiments having additional features or other embodiments incorporating different combinations of the stated features.

It must also be noted that, the term "exemplary" is used in the sense of "example," rather than "ideal."

It must also be noted that, as used in the specification and the appended claims, the singular forms "a," "an" and "the" include plural referents unless the context clearly dictates otherwise.

By "comprising" or "containing" or "including" it is meant that at least the named compound, element, particle, or method step is present in the composition or article or method, but does not exclude the presence of other compounds, materials, particles, method steps, even if the other such compounds, material, particles, method steps have the same function as what is named.

Relative terms, such as "about," "substantially," or "approximately" are used to include small variations with specific numerical values (e.g., +/- x%,), as well as including the situation of no variation (+/-0%). In various embodiments, the numerical value x is less than or equal to 10 - e.g., less than or equal to 5, to 2, to 1, or smaller.

As used herein, "database" refers to any suitable database for storing information, electronic files or code to be utilized to practice embodiments of this disclosure. As used herein, "server" refers to any suitable server, computer or computing device for performing functions utilized to practice embodiments of this disclosure.

As used herein, "software" refers to programs or other operating information utilized by a processor or other computing hardware.

As used herein, "meeting" means a meeting or conference such as telephonic, video, audio/video, in-person, a hybrid of any of the preceding, and any type of meeting involving multiple participants.

This disclosure provides systems and methods for creating a targeted generative model (also referred to herein as a "MicroGPT") for generating content relevant to a specific context in a secure, isolated environment. More specifically, the targeted generative model may be created based on a virtual meeting. The systems and methods described herein can create an interactive targeted generative model that can transform traditional methods of recording and summarizing meetings, replacing those methods with artificial intelligence (AI) models that can be queried interactively. Each targeted generative model is tailored to a specific event, meeting, or proceeding, encapsulating all relevant information and discussions from that particular context. Users can engage directly with the targeted generative model to extract detailed insights, ask follow-up questions, and obtain precise information related to the event. To create the targeted generative models, the system described herein can focus on the practical knowledge from a single collaboration event or a closely related series of meetings. Unlike broader LLM applications, the targeted generative model can be finely tuned to a specific event's data, so that the responses and summaries it provides may be relevant and contextually accurate. This specialized focus allows for a more efficient use of computational resources, tailored to the scope of the meeting rather than applying a one-size-fits-all model across various superficial, generic contexts.

Unlike static recordings or textual summaries, the targeted generative models described herein may be fluid and interactive, allowing stakeholders to revisit and analyze meeting content, enhancing the accessibility and utility of recorded information. Each targeted generative model may operate independently, so that the knowledge it contains remains focused and isolated to its specific event, thus maintaining data integrity and relevance without the risk of cross-contamination.

Existing systems have applied various methods to manage and elicit specific details from meetings. Specialized software for notetaking and meeting management allow for detailing proceedings in document records, but lack real-time processing and personalized contextual understanding. For example, enterprise content management systems have been employed to organize and archive meeting documents and discussions, though they often do not support interactive querying or contextual insights.

In some existing systems, standard LLMs have been integrated into collaborative tools. The use of standard LLMs integrated into collaborative tools can help summarize texts and model query-based information retrieval functionalities, but are generally not tailored to handle the specifics of smaller language corpus-based contexts. Therefore, for individual meetings, standard LLMs lack the basis to deeply understand or generate content based purely on the isolated context of a single event. As another example, transcription services can capture meeting details verbatim. However, they do not offer any analysis or interactive capabilities post-transcription.

In addition, the more advanced existing AI-driven tools can provide contextual summaries and action items by employing natural language understanding. However, these solutions still rely on broader LLM frameworks that are not customized for the specific, nuanced needs of individual sessions or projects, leading to potential inaccuracies and a lack of precision in data handling.

The systems and methods described herein address the above-described shortcomings by providing for the creation of a targeted generative model which utilizes a tailored approach designed to overcome these limitations by focusing solely on the specifics of narrowly defined experiences, such as individual meetings or related series of discussions. Unlike standard LLMs, the targeted generative model described herein may be capable of providing precise, context-specific interactions and may operate within a controlled knowledge environment to ensure security and data integrity. With this specialization, responses to user queries using the targeted generative model can be not only immediately relevant but can also be compliant with stringent information security standards, addressing both the practical and regulatory demands of business environments.

By isolating the knowledge base to single events or related discussions, there is a minimized risk of cross contamination between unrelated contexts, which is an advantage over general LLMs that amalgamate knowledge from diverse sources. This makes the targeted generative model particularly suitable for use in environments with stringent data security requirements. The data can be locked down and does not need to be integrated into a larger, more general database. Each session's data can be encapsulated within its respective targeted generative model, reducing data exposure.

The targeted generative models can integrate with existing meeting platforms, providing real-time learning capabilities during meetings and enabling immediate, interactive follow-up questions post-meeting. This level of integration and interaction is not typically available in current solutions, which either focus on passive data storage or lack the capability to adapt dynamically to the flow of a specific meeting. The ability of the targeted generative model to operate within these confines not only can improve the user experience but also allows the model's performance to be directly aligned with the user's specific needs, distinguishing it from less flexible, more resource-intensive alternatives.

Therefore, the targeted generative model can essentially replace traditional, static meeting minutes. This can transform the way proceedings are captured, accessed, and utilized post-meeting, by eliminating the need to sift through pages of linear, text-based minutes. Instead, participants and stakeholders can engage with an AI-powered system that offers interactive dialogue and instant access to specific details of their meetings.

The systems and methods described herein may use the established strengths of generative AI to distill and concatenate knowledge from distinct, isolated experiences, while strategically limiting the integration and spoilage of this data into the broader, less specific memory-datastores, characteristic of conventional LLM-based frameworks. By employing a targeted generative approach, the targeted generative model may keep each unit of knowledge pristine and relevant to the specific context it was designed for. This method may preserve the integrity and applicability of the information, avoiding the dilution and potential security risks associated with the widespread data amalgamation seen in standard LLMs. Thus, the targeted generative model can offer a focused, secure, and efficient alternative to standard LLMs, harnessing the power of AI to serve precise informational needs without the overhead and risks of traditional large-scale models.

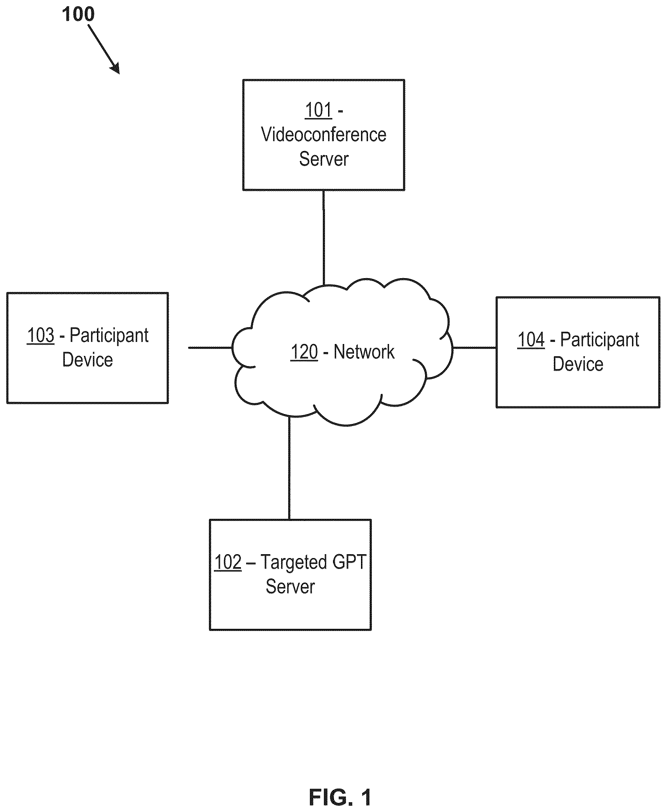

Turning to the figures, FIG. 1 illustrates a block diagram of a system 100 that can be employed for creating a targeted generative model for generating text relevant to a specific context, as described in greater detail below. System 100 is merely exemplary and embodiments of the system are not limited to the embodiments presented herein. System 100 can be employed in many different embodiments or examples not specifically depicted or described herein. In some embodiments, certain elements or modules of system 100 can perform various procedures, processes, and/or activities. In these or other embodiments, the procedures, processes, and/or activities can be performed by other suitable elements or modules of system 100.

Generally speaking, system 100 can be implemented with hardware and/or software. Part or all of the hardware and/or software implemented in system 100 can be conventional or part or all of the hardware and/or software can be customized (e.g., optimized) for implementing part or all of the functionality of system 100 described herein.

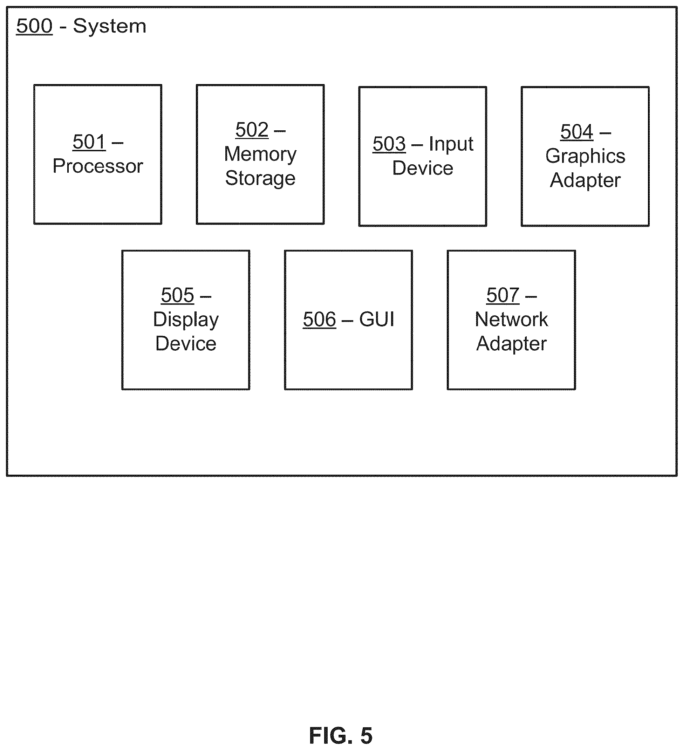

System 100 can include videoconference server 101, targeted GPT server 102, and/or participant devices 103, 104. Videoconference server 101, targeted GPT server 102, and/or participant devices 103, 104 can each be a computer system, such as computer system 500 (FIG. 5), as described below, and can each be a single computer, a single server, a cluster or collection of computers or servers, or a cloud of computers or servers.

Participant devices 103, 104 can comprise any of the elements described in relation to computer system 500 (FIG. 5). For example, participant devices 103, 104 can be mobile devices. A mobile device can refer to a portable electronic device (e.g., an electronic device easily conveyable by hand by a person of average size) with the capability to present audio and/or visual data (e.g., text, images, videos, music, etc.). For example, a mobile electronic device can comprise at least one of a digital media player, a cellular telephone (e.g., a smartphone), a personal digital assistant, a handheld digital computer device (e.g., a tablet personal computer device), a laptop computer device (e.g., a notebook computer device, a netbook computer device), a wearable user computer device, or another portable computer device with the capability to present audio and/or visual data (e.g., images, videos, music, etc.). Thus, in many examples, a mobile electronic device can comprise a volume and/or weight sufficiently small as to permit the mobile electronic device to be easily conveyable by hand.

Exemplary mobile electronic devices can comprise (i) an iPod^{®}, iPhone^{®}, iTouch^{®}, iPad^{®}, MacBook^{®} or similar product by Apple Inc. of Cupertino, California, United States of America, (ii) a Blackberry^{®} or similar product by Research in Motion (RIM) of Waterloo, Ontario, Canada, (iii) a Lumia^{®} or similar product by the Nokia Corporation of Keilaniemi, Espoo, Finland, and/or (iv) a Galaxy^{™} or similar product by the Samsung Group of Samsung Town, Seoul, South Korea. Further, in the same or different embodiments, a mobile electronic device can comprise an electronic device configured to implement one or more of (i) the iPhone^{®} operating system by Apple Inc. of Cupertino, California, United States of America, (ii) the Blackberry^{®} operating system by Research In Motion (RIM) of Waterloo, Ontario, Canada, (iii) the Palm^{®} operating system by Palm, Inc. of Sunnyvale, California, United States, (iv) the Android^{™} operating system developed by the Open Handset Alliance, (v) the Windows Mobile^{™} operating system by Microsoft Corp. of Redmond, Washington, United States of America, or (vi) the Symbian^{™} operating system by Nokia Corp. of Keilaniemi, Espoo, Finland.

Further still, the term "wearable user computer device" as used herein can refer to an electronic device with the capability to present audio and/or visual data (e.g., text, images, videos, music, etc.) that is configured to be worn by a user and/or mountable (e.g., fixed) on the user of the wearable user computer device (e.g., sometimes under or over clothing; and/or sometimes integrated with and/or as clothing and/or another accessory, such as, for example, a hat, eyeglasses, a wrist watch, shoes, etc.). A wearable user computer device can comprise a mobile electronic device, and vice versa. However, a wearable user computer device does not necessarily comprise a mobile electronic device, and vice versa.

In specific examples, a wearable user computer device can comprise a head mountable wearable user computer device (e.g., one or more head mountable displays, one or more eyeglasses, one or more contact lenses, one or more retinal displays, etc.) or a limb mountable wearable user computer device (e.g., a smart watch, smart ring, etc.). In these examples, a head mountable wearable user computer device can be mountable in close proximity to one or both eyes of a user of the head mountable wearable user computer device and/or vectored in alignment with a field of view of the user.

In more specific examples, a head mountable wearable user computer device can comprise (i) Google Glass^{™} product or a similar product by Google Inc. of Menlo Park, California, United States of America; (ii) the Eye Tap^{™} product, the Laser Eye Tap^{™} product, or a similar product by ePI Lab of Toronto, Ontario, Canada, and/or (iii) the Raptyr^{™} product, the STAR 1200^{™} product, the Vuzix Smart Glasses M100^{™} product, or a similar product by Vuzix Corporation of Rochester, New York, United States of America. In other specific examples, a head mountable wearable user computer device can comprise the Virtual Retinal Display^{™} product, or similar product by the University of Washington of Seattle, Washington, United States of America. Meanwhile, in further specific examples, a limb mountable wearable user computer device can comprise the iWatch^{™} product, or similar product by Apple Inc. of Cupertino, California, United States of America, the Galaxy Gear or similar product of Samsung Group of Samsung Town, Seoul, South Korea, the Moto 360 product or similar product of Motorola of Schaumburg, Illinois, United States of America, and/or the Zip^{™} product, One^{™} product, Flex^{™} product, Charge^{™} product, Surge^{™} product, or similar product by Fitbit Inc. of San Francisco, California, United States of America.

Videoconference server 101, targeted GPT server 102, and/or one or more of participant devices 103, 104 can each comprise one or more input devices (e.g., one or more keyboards, one or more keypads, one or more pointing devices such as a computer mouse or computer mice, one or more touchscreen displays, a microphone, etc.), and/or can each comprise one or more display devices (e.g., one or more monitors, one or more touch screen displays, projectors, etc.). In these or other embodiments, one or more of the input device(s) can be similar or identical to input device 503 (FIG. 5). Further, one or more of the display device(s) can be similar or identical to display device 505 (FIG. 5). The input device(s) and the display device(s) can be coupled to the processing module(s) and/or the memory storage module(s) of videoconference server 101, targeted GPT server 102, and/or one or more of participant devices 103, 104 in a wired manner and/or a wireless manner, and the coupling can be direct and/or indirect, as well as locally and/or remotely. As an example of an indirect manner (which may or may not also be a remote manner), a keyboard-video-mouse (KVM) switch can be used to couple the input device(s) and the display device(s) to the processing module(s) and/or the memory storage module(s). In some embodiments, the KVM switch also can be part of videoconference server 101, targeted GPT server 102, and/or one or more of participant devices 103, 104. In a similar manner, the processing module(s) and the memory storage module(s) can be local and/or remote to each other.

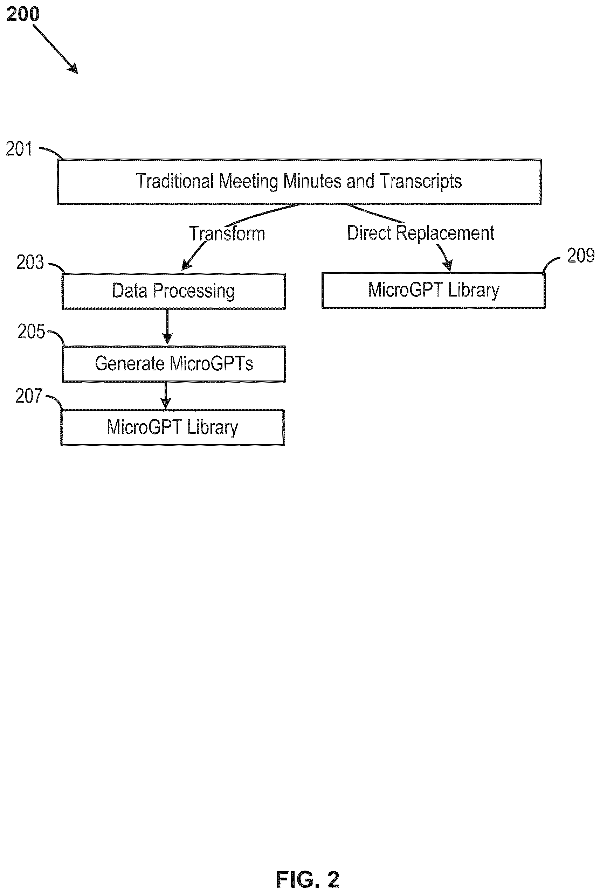

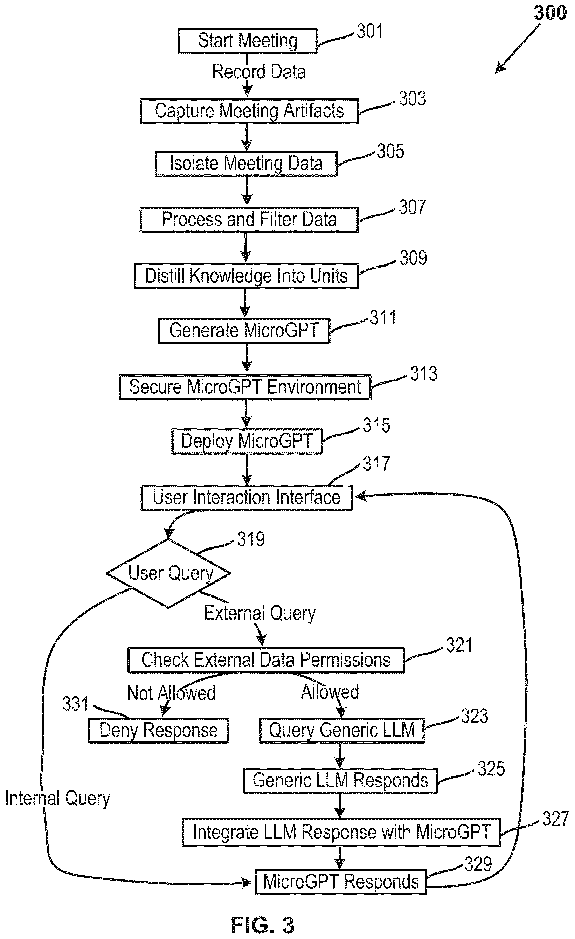

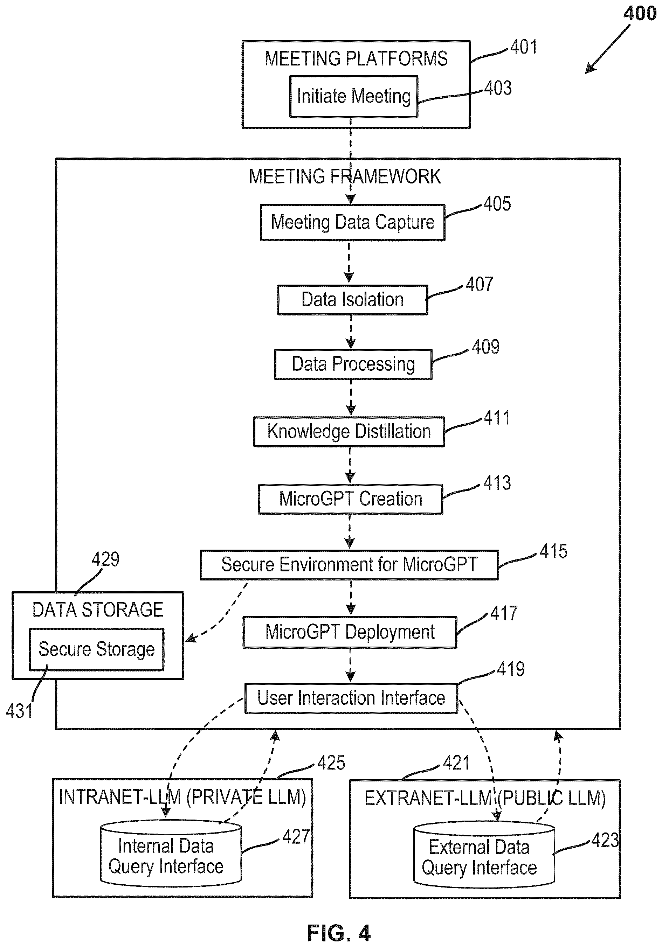

Videoconference server 101 can host and/or run one or more videoconference software platforms. Targeted GPT server 102 can host a system for creating a targeted generative model as described herein. For example, targeted GPT server 102 can perform one or more steps of method 200 (FIG. 2), method 300 (FIG. 3), and/or method 400 (FIG. 4). In some embodiments, targeted GPT server 102 can be embodied in and/or distribute a software application capable of performing one or more steps of method 200 (FIG. 2), method 300 (FIG. 3), and/or method 400 (FIG. 4). The software application can be installed/installable on one or more of participant devices 103, 104.

Videoconference server 101, targeted GPT server 102, and/or participant devices 103, 104 can communicate or interface (e.g., interact) with one another through network 120. Network 120 can be an intranet that is not open to the public, a mesh network of individual systems, and/or a distributed system. Accordingly, in many embodiments, videoconference server 101 and/or targeted GPT server 102 (and/or the software used by such systems) can refer to a back end of system 100 operated by an operator and/or administrator of system 100, and participant devices 103, 104 (and/or the software used by such systems) can refer to a front end of system 100 used by one or more participants, respectively. An operator and/or administrator of system 100 can manage system 100, the processing module(s) of system 100, and/or the memory storage module(s) of system 100 using the input device(s) and/or display device(s) of system 100.

Videoconference server 101, targeted GPT server 102, and/or participant devices 103, 104 also can be configured to communicate with one or more databases. The one or more databases can comprise a generative model library database that stores information about each generative model in a library. The one or more databases can also comprise a historical videoconference database that stores records about past videoconferences. A historical videoconference database can also comprise an interaction database containing information about interactions of participant devices with a videoconference. These interactions can be tied to a unique identifier (e.g., an IP address, an advertising ID, device ID, etc.) and/or a user account. In embodiments where a participant interacts with a videoconference before logging into a user account, data stored in the one or more databases that is associated with a unique identifier can be merged with and/or associated with data associated with the user account. Data can be deleted from a database when it becomes older than a maximum age, which can be set by an administrator of system 100. Data collected in real-time can be streamed to a database for storage, thereby increasing a storage speed of a database.

The one or more databases can be stored on one or more memory storage modules (e.g., non-transitory memory storage module(s)), which can be similar or identical to the one or more memory storage module(s) (e.g., non-transitory memory storage module(s)) described above with respect to computer system 500 (FIG. 5). Further, the one or more databases can each be stored on a single memory storage module of the memory storage module(s), and/or the non-transitory memory storage module(s) storing the one or more databases or the contents of that particular database can be spread across multiple ones of the memory storage module(s) and/or non-transitory memory storage module(s) storing the one or more databases, depending on the size of the particular database and/or the storage capacity of the memory storage module(s) and/or non-transitory memory storage module(s). In various embodiments, databases can be stored in a cache (e.g., MegaCache) for immediate retrieval on-demand. The one or more databases can each comprise a structured (e.g., indexed) collection of data and can be managed by any suitable database management systems configured to define, create, query, organize, update, and manage database(s). Exemplary database management systems can include MySQL (Structured Query Language) Database, PostgreSQL Database, Microsoft SQL Server Database, Oracle Database, SAP (Systems, Applications, & Products) Database, IBM DB2 Database, and/or NoSQL Database.

Meanwhile, communication between videoconference server 101, targeted GPT server 102, participant devices 103, 104, and/or the one or more databases can be implemented using any suitable manner of wired and/or wireless communication. Accordingly, system 100 can comprise any software and/or hardware components configured to implement the wired and/or wireless communication. Further, the wired and/or wireless communication can be implemented using any one or any combination of wired and/or wireless communication network topologies (e.g., ring, line, tree, bus, mesh, star, daisy chain, hybrid, etc.) and/or protocols (e.g., personal area network (PAN) protocol(s), local area network (LAN) protocol(s), wide area network (WAN) protocol(s), cellular network protocol(s), powerline network protocol(s), etc.). Exemplary PAN protocol(s) can comprise Bluetooth, Zigbee, Wireless Universal Serial Bus (USB), Z-Wave, etc.; exemplary LAN and/or WAN protocol(s) can comprise Institute of Electrical and Electronics Engineers (IEEE) 802.3 (also known as Ethernet), IEEE 802.11 (also known as WiFi), etc.; and exemplary wireless cellular network protocol(s) can comprise Global System for Mobile Communications (GSM), General Packet Radio Service (GPRS), Code Division Multiple Access (CDMA), Evolution-Data Optimized (EV-DO), Enhanced Data Rates for GSM Evolution (EDGE), Universal Mobile Telecommunications System (UMTS), Digital Enhanced Cordless Telecommunications (DECT), Digital Advanced Mobile Phone System (AMPS) (IS-136/Time Division Multiple Access (TDMA)), Integrated Digital Enhanced Network (iDEN), Evolved High-Speed Packet Access (HSPA+), Long-Term Evolution (LTE), WiMAX, etc. The specific communication software and/or hardware implemented can depend on the network topologies and/or protocols implemented, and vice versa. In many embodiments, exemplary communication hardware can comprise wired communication hardware including, for example, one or more data buses, such as, for example, universal serial bus(es), one or more networking cables, such as, for example, coaxial cable(s), optical fiber cable(s), and/or twisted pair cable(s), any other suitable data cable, etc. Further exemplary communication hardware can comprise wireless communication hardware including, for example, one or more radio transceivers, one or more infrared transceivers, etc. Additional exemplary communication hardware can comprise one or more networking components (e.g., modulator-demodulator components, gateway components, etc.).

FIG. 2 is a flowchart of a method 200 for creating and storing a targeted generative model for generating text relevant to a specific context according to aspects of this disclosure. The method 200 may be initiated from the commencement of use of a videoconferencing software by a user. For example, the method 200 may be initiated by the beginning of a video call, teleconference, virtual meeting, and the like. In other embodiments, the method 200 may be initiated ad-hoc by a user, such as by the user turning on a setting within their videoconferencing software, or initiated by the system automatically on a scheduled basis, such as every hour, week, etc. or at a set day/time.

The method 200 begins at block 201, where the system may receive or retrieve traditional meeting minutes and transcripts. These may originate from a videoconferencing software. Traditional meeting minutes may include a formal electronically written record of a meeting that documents the key topics, purpose, decisions, agenda items, next meetings scheduled, attendees of the meeting, and the like. The meeting transcripts may be a detailed written text version of the audio from the meeting and may contain a written record of everything said during the meeting. The transcript may further include who spoke during the meeting, along with timestamps associated with the speech in the meeting.

The method 200 may either transform the data (e.g., traditional meeting minutes and transcripts) or perform direct replacement of the data. Transforming the data may occur when no targeted generative model has been created yet for the meeting and/or experience. In the case of transforming the data, the method 200 may proceed to block 203 where it can perform data processing of the minutes and transcript data. Data processing may include isolating, segregating, and categorizing the data, described in further detail below with respect to FIG. 3.

At block 205, the system can generate MicroGPTs (e.g., targeted generative models) based on the processed data. More specifically, the system can generate a specific MicroGPT for each event in the data and train the MicroGPT on the data extracted via the data processing at block 203. Each MicroGPT can be further tuned for specific event nuances. The process of generating the MicroGPTs will be described in further detail below with respect to FIG. 3 and FIG. 4.

At block 207, the system can store the generated MicroGPTs in a MicroGPT Library. Therefore, the generated MicroGPTs can be accessed at a later time, if relevant, from the MicroGPT Library. For example, if a user queries the MicroGPT library for information about a specific meeting, the MicroGPT created based on that meeting can be accessed for a response. The MicroGPT Library may include a collection of pre-written code that can provide the functionalities of each MicroGPT that the system generates.

At block 209, in the case where the system performs direct replacement of the traditional meeting minutes and transcripts, the system can access the MicroGPT Library in order to perform the task. For example, instead of manually taking minutes or recording a transcript of a meeting, the system can utilize the created MicroGPT instead to record information about the meeting, accessing it from the MicroGPT Library.

FIG. 3 illustrates a flow diagram of a method 300 for creating and querying a targeted generative model for generating text relevant to a specific context. The method 300 may be triggered upon initiation of a session of a communication tool (e.g., video call, voice conference, virtual meeting etc.), triggered ad-hoc by a user, or initiated based on a set schedule. In some embodiments, the targeted generative model may be integrated within the communication tool or meeting application.

Before any data capture or processing can begin, the system may create a secure, isolated computational environment, designed to handle targeted generative model operations. This environment may be configured so that data flows are restricted to designated secure zones, preventing any data transfer to or from publicly accessible LLM systems. Dedicated servers and virtual machines may be physically and logically segregated from other network resources. The systems and methods may apply advanced security such as encryption safeguards to secure communication channels, and rigorous access control systems to maintain standard data integrity and confidentiality.

The method 300 for creating a targeted generative model may be as follows. The method 300 begins at block 301, when a meeting (also referred to herein as a "collaboration event") starts. The meeting may start with the beginning of a video call, teleconference, virtual meeting, and the like. When a meeting or collaboration event starts, the system may begin capturing and/or recording all aspects of the event, including stakeholder join/leave events, chat, audio, video, shared screens, etc. This may occur while the event is in progress. The collaboration event may be a virtual meeting, video call, phone call, teleconference, video conference, webinar, or other virtual event.

At block 303, the system can capture meeting artifacts or data. The system may perform data capture of the event using context-gathering tools. For example, the system may deploy digital notepads, transcription services, and off-the-shelf AI-driven context recognition software to comprehensively capture details from the event. This may include topic recognition, action register, sentiment analysis, etc. for the purpose of creating interactive GPTs with purpose-driven footprints. Topic recognition may be a machine learning technique to identify primary themes or topics within data. Action register may be a centralized database where the system can track all actions taken in the meeting. Sentiment analysis may be a machine learning technique to analyze the transcript or other meeting data to determine the emotional tone or sentiment expressed in the meeting by the speakers.

At block 305, the system may isolate and segregate data post-event (e.g., after conclusion of the call or videoconference). The system may securely separate the captured data immediately to prevent any external data integration (e.g., spoilage) or from data not relevant to the event. It may not be enough to just use programming rules that "firewall" meeting knowledge from public datasets that make up the LLM. By separating the captured data, the risk of the data making it into the public domain is minimized.

At block 307, the system can process, analyze, and filter the isolated data. Preliminary natural language processing (NLP) filters can analyze the data to categorize key information such as topics, decisions, and action items. The system can put the data into an intake engine for the targeted generative model. For example, the intake engine may be a system that uses AI to process and organize the incoming data.

At block 309, the system can distill or concatenate the knowledge from block 307 into units. The knowledge units may be structured pieces of information within a knowledge base (e.g., meeting or series of related meetings), representing a fact, concept, or relationship that the targeted generative model can understand and utilize for reasoning and decision-making. In some embodiments, the system can distill knowledge using Generative AI. In the distillation process, the system can parse and extract salient points (e.g., facts) from the data, based on relevance to the event and accuracy and enhance the GPT framework based on extracted meeting facts, experiences, etc. only. These salient points may be the most pertinent data that can contribute to the targeted generative model's decision-making process.

The system can group related knowledge units while maintaining distinct contextual boundaries. For example, after a strategic planning meeting for a new product launch, various types of data are collected, including discussion transcripts, presentation slides, and decision logs. The data can be grouped into related categories with distinct boundaries, which can be utilized by the targeted generative model.

At block 311, the system can generate a MicroGPT. The system can create specific MicroGPTs for each specific event, training them on the extracted knowledge and tuning for specific event nuances. The MicroGPT may be trained and may operate within a secure, isolated environment, restricted to event-specific data, and while leveraging generative model infrastructure. In some embodiments, the system can organize each MicroGPT within a wiki-like, event-based database for easy retrieval. Each MicroGPT may be in a secure, isolated environment to preserve the integrity and security of the data. The MicroGPT may then be trained using the knowledge units and is trained only on data related to the event.

In embodiments, the MicroGPT may be enabled with a search functionality. Therefore, the system can allow natural language queries to search within the database storing the MicroGPTs to direct users to relevant MicroGPTs. The system can facilitate user interaction (e.g., via a user interface) with MicroGPTs and/or design interfaces for users to engage with MicroGPTs, querying specific details about events.

In embodiments, MicroGPTs may process queries with the (1) learning and querying capabilities of generic LLMs or (2) allow for a self-contained architecture. Using the self-contained architecture, the MicroGPT framework disclosed herein is distinct from public LLMs in that it is specifically designed to process and respond to information from individual meetings or events, ensuring contextualized, secure, and compliant handling of sensitive data, unlike public LLMs which operate on broader, less controlled datasets.

At block 313, the system may secure the MicroGPT environment. In order to secure the MicroGPT environment, the system may isolate the MicroGPT from other MicroGPTs and public LLMs' data to prevent the data from the current MicroGPT from leaking into the public domain.

At block 315, the system may deploy (e.g., integrating the trained MicroGPT into a live system or application in order to be available for use) the MicroGPT. Once deployed, users may query the MicroGPT for information related to associated meetings.

At block 317, the system may utilize a user interaction interface. The user interaction interface may be a graphical user interface (GUI) implemented on a display. The user interaction interface may facilitate interaction between a user and a computer system, such as via a website or application, allowing the user to input queries, commands, etc. to the MicroGPT.

At block 319, the system may receive a user query. The user query may be a natural language query, command, prompt, question, or text query input into the user interaction interface. The user query may request specific details about events. For example, the user may input into the interface "What were the action items from last week's team meeting?" If the query is internal to the MicroGPT system, then the MicroGPT can respond to the query at block 329. For example, the MicroGPT may respond to the query with a list of the action items from last week's team meeting.

If the query is external to the MicroGPT system, then the method 300 proceeds to block 312, where the system may check the external data permissions. The external data permissions indicate whether the MicroGPT system may access data external to the meeting data. For example, weather or news data may be relevant to respond to queries related to a meeting (e.g., meeting was cancelled due to a snowstorm or community emergency). Therefore, the system may need to access external weather or news data and permissions are allowed. If the external data permissions are allowed, then at block 323, the system can query a generic LLM with the user query as input (e.g., "What was happening in Los Angeles on the date of the meeting?"). At block 325, the generic LLM can respond to the user query accordingly (e.g., "A fire broke out causing road closures"). At block 327, the system can integrate the LLM response with the MicroGPT (e.g., "The meeting was cancelled due to road closures from a fire breaking out in Los Angeles."). Then, at block 329, the MicroGPT responds to the user query with the data acquired from the LLM response and MicroGPT response.

If the permissions are not allowed, then, at block 331, the system can deny the response to the query. In this case, the method 300 ends.

FIG. 4 is a flowchart for a method 400 for creating a targeted generative model for generating text relevant to a specific context within a meeting framework according to aspects of this disclosure.

Within a meeting platform 401, the system may initiate a meeting at block 403. The meeting may be initiated with the beginning of a video call, teleconference, virtual meeting, and the like. The meeting platform 401 may be a software application that allows people to connect and interact online through video, audio, and/or chat, which can simulate an in-person meeting, such as the software platforms operating on the videoconference server 101 of FIG. 1.

Within the meeting framework may be blocks 405 through 419. The meeting framework may be the framework in which the MicroGPT can be created. This process is described in more detail above with respect to FIG. 3.

At block 405, the system can capture meeting data while the meeting is in progress. Meeting data may include stakeholder join/leave events, chat, audio, video, shared screens, etc.

At block 407, the system can isolate the meeting data. For example, the system may securely separate the captured data immediately to prevent any external data integration (e.g., spoilage).

At block 409, the system can process the isolated meeting data. Preliminary natural language processing (NLP) filters can categorize key information from the meeting data, such as topics, decisions, and action items from the meeting. In some embodiments, the system can put the data into an intake engine, which can prepare the data for the targeted generative model.

At block 411, the system can distill knowledge from the processed meeting data. The data may be distilled into knowledge units, as described above with respect to FIG. 3.

At block 413, the system can create a MicroGPT. The system can create specific MicroGPTs for each event, training them on the extracted knowledge and tuning for specific event nuances. In some embodiments, the system can organize each MicroGPT within a wiki-like, event-based database for easy retrieval.

At block 415, the system can secure the environment for the MicroGPT. In order to secure the MicroGPT environment, the system may isolate the MicroGPT from other MicroGPTs and public LLMs' data to avoid the data from the current MicroGPT from leaking into the public domain.

At block 417, the system can deploy (e.g., integrating the trained MicroGPT into a live system or application in order to be available for use) the MicroGPT. Once deployed, users may query the MicroGPT for information related to associated meetings.

At block 419, the system can implement a user interaction interface. The user interaction interface may be a graphical user interface (GUI) implemented on a display. The user interaction interface may facilitate interaction between a user and a computer system, such as via a website or application, allowing the user to input queries, commands, etc. to the MicroGPT.

The user interaction interface may interact with an internal data query interface 427 within an intranet-LLM (private LLM) 425. The intranet-LLM 425 may be a custom built LLM that may be exclusively operated by a specific entity. The intranet-LLM 425 may be isolated from public LLMs and public data so that it may be trained on proprietary data to maintain data privacy and security. This can help to avoid the risk of the LLM using non-proprietary data or from the proprietary data within the LLM being leaked into the public domain.

The user interaction interface may also interact with an external data query interface 423 within an extranet-LLM (public LLM) 421. The extranet-LLM 421 may be a public facing LLM that has unrestrained access to public data on the internet. Therefore, unlike the intranet-LLM 425, the data is not private or secure and has the potential to be accessed by the public.

Optionally, the system may, at block 431 following block 415, perform secure storage of the MicroGPT in a data storage 429, such as the one or more databases described in FIG. 1.

FIG. 5 illustrates a block diagram of a system 500 that can be employed for creating a targeted generative model, as described in greater detail below. System 500 is merely exemplary and embodiments of the system are not limited to the embodiments presented herein. System 500 can be employed in many different embodiments or examples not specifically depicted or described herein. In some embodiments, certain elements or modules of system 500 can perform various procedures, processes, and/or activities. In these or other embodiments, the procedures, processes, and/or activities can be performed by other suitable elements or modules of system 500.

Generally speaking, system 500 can be implemented with hardware and/or software. Part or all of the hardware and/or software implemented in system 500 can be conventional or part or all of the hardware and/or software can be customized (e.g., optimized) for implementing part or all of the functionality of system 500 described herein. When implemented as software, one or more elements of system 500 can be emulated (e.g., reproduced functionally and/or by action via software). For example, a virtual machine having one or more elements described below can be instantiated on one or more elements of system 100 (FIG. 1).

When implemented as hardware, one or more of the elements of system 500 can be coupled together using one or more chassis configured to hold one or more circuit boards and/or serial bus(es). These boards and buses allow the various elements of system 500 to communicate amongst each other to accomplish their intended purposes. While elements of system 500 are described below individually, each can also be integrated into one or more chassis, circuit boards, and/or buses of system 500. On the other hand, one or more elements of system 500 can also be removable (e.g., via a PCI slot on a motherboard and/or a USB port). One or more elements of system 500 may also be integrated and/or embedded in a different machine or manufacture. Although specific constructions of boards and buses within system 500 are not shown, it should be understood that their construction can be tied to a form factor selected for system 500.

System 500 can take a number of different form factors based on its implementation. For example, system 500 can be implemented as a desktop computer, a laptop computer, a mobile device, and/or a wearable user computer device as described herein. Further, system 500 can comprise a single computer, a single server, a cluster or collection of computers or servers, or a cloud of computers or servers. Typically, a cluster or collection of servers can be used when the demand on 500 exceeds the reasonable capability of a single server or computer, when a distributed structure for system 500 is desired, and/or when parallel computing is desired.

In many embodiments, system 500 can comprise a processor 501, a memory storage 502, an input device 503, a graphics adapter 504, a display device 505, a graphical user interface (GUI) 506, and/or a network adapter 507.

Generally speaking, processor 501 can comprise any type of computational circuit. For example, processor 501 can comprise a microprocessor, a microcontroller, a controller, a complex instruction set computing (CISC) microprocessor, a reduced instruction set computing (RISC) microprocessor, a very long instruction word (VLIW) microprocessor, a graphics processor, a digital signal processor, application specific integrated circuits (ASICs), etc. Processor 501 can be configured to implement (e.g., run) computer instructions (e.g., program instructions) stored on memory devices in system 500. At least a portion of the program instructions, stored on these devices, can be suitable for carrying out at least part of the techniques and methods described herein. Architecture and/or design of processor 501 can be compliant with any of a variety of commercially distributed architecture families. For example, a processor can have a 32-bit (x86) architecture and/or a 64-bit (x86-64, IA64, and AMD64) architecture. Processor 501 can be configured to perform parallel computing in combination with other elements of system 500 and/or additional processors. Generally speaking, parallel computing can be seen as a technique where multiple elements of system 500 are used to perform calculations simultaneously. In this way, complex and repetitive tasks (e.g., training a predictive software application) can be performed faster and with less processing power than without parallel computing.

Generally speaking, memory storage 502 can comprise non-volatile memory (e.g., read only memory (ROM)) and/or volatile memory (e.g., random access memory (RAM)). The non-volatile memory can be removable and/or non-removable non-volatile memory. Meanwhile, RAM can comprise dynamic RAM (DRAM), static RAM (SRAM), or some other type of RAM. Further, ROM can include mask-programmed ROM, programmable ROM (PROM), one-time programmable ROM (OTP), erasable programmable read-only memory (EPROM), electrically erasable programmable ROM (EEPROM) (e.g., electrically alterable ROM (EAROM) and/or flash memory), or some other type of ROM. Memory storage 502 can comprise non-transitory memory and/or transitory memory. All or a portion of memory storage 502 can be referred to as memory storage module(s) and/or memory storage device(s). Memory storage 502 can have a number of form factors when used in system 500. For example, memory storage 502 can comprise a magnetic disk hard drive, a solid state hard drive, a removable USB storage drive, a RAM chip, etc.

Memory storage 502 can be encoded with a wide variety of computer code configured to operate system 500. For example, portions of memory storage 502 can be encoded with a boot code sequence suitable for restoring system 500 to a functional state after a system reset. As another example, portions of memory storage 502 can comprise microcode such as a Basic Input-Output System (BIOS) operable with elements of system 500. Further, portions of the memory storage 502 can comprise an operating system (e.g., a software program that manages the hardware and software resources of a computer and/or a computer network). The BIOS can be configured to initialize and test components of system 500 and load the operating system. Meanwhile, the operating system can perform basic tasks such as, for example, controlling and allocating memory, prioritizing the processing of instructions, controlling input and output devices, facilitating networking, and/or managing files. Exemplary operating systems can comprise software within the Microsoft^{®} Windows^{®}, Mac OS^{®}, Apple^{®} iOS^{®}, Google^{®} Android^{®}, UNIX^{®}, and/or Linux^{®} series of operating systems.

Input device 503 can be configured to allow a user to interact and/or control elements of system 500. A number of devices and be used as input device 503 alone or in combination. For example, input device 503 can comprise a keyboard, a mouse, a touch screen, a microphone, a camera, etc. Input device 503 can be coupled to other elements of system 500 in a number of ways. For example, input device 503 can be coupled via a Universal Serial Bus (USB) port in a wired and/or wireless manner or via a specialized port (e.g., a PS/2 port) depending on the specific device. User inputs through input device 503 can come in a number of forms. For example, when input device 503 comprises a microphone, user input can be received via voice commands and/or a speech to text software application. As another example, when input device 503 comprises a camera, user input can be received via bodily movements that are captured and interpreted by system 500.

Generally speaking, graphics adapter 504 can be configured to receive and/or generate one or more elements for display on display device 505. Exemplary embodiments of graphics adapter 504 can comprise devices within the NVIDIA^{®} GeForce^{®} and/or the AMD^{®} RX^{®} series of video cards. In many embodiments, a chipset present on graphics adapter 504 can be configured to perform similar, simultaneous computations in a manner more efficient than other chipsets. For example, rendering a 3D scene on graphics adapter 504 can involve repeated geometric calculations performed in parallel to generate the 3D scene. As another example, repeated mathematical calculations involved in training a predictive software application can be performed in parallel on graphics adapter 504 more efficiently thank on processor 501. Display device 505 can receive and display signals from graphics adapter 504. A number of devices can be used as display device 505. For example, display device 505 can comprise a computer monitor, a television, a touch screen display, a heads up display (HUD) medium, etc.

In some embodiments, display device 505 can optionally display graphical user interface (GUI) 506. GUI 506 can be a part of and/or displayed by participant devices 103, 104. With regards to form, GUI 506 can comprise text and/or graphics (image) based user interfaces. For example, GUI 506 can comprise a heads up display (HUD). When GUI 506 comprises a HUD, GUI 506 can be projected onto a medium (e.g., glass, plastic, metal, etc.), displayed in midair as a hologram, and/or displayed on display device 505. GUI 506 can be color, black and white, and/or greyscale. GUI 506 can be implemented as an application running on a computer system, such as computer system 500, videoconference server 101 (FIG. 1), targeted GPT server 102 (FIG. 1), and/or participant devices 103, 104 (FIG. 1). GUI 506 can also comprise a website accessed through a network (e.g., network 120 (FIG. 1)). For example, GUI 506 can comprise a cloud storage website. When GUI 506 allows for modification and/or changes to one or more settings in system 500, it can be referred to as an administrative (e.g., back end) GUI. GUI 506 can also be displayed as or on a virtual reality (VR) and/or augmented reality (AR) system or display. GUI 506 can receive a number of interactions from a user via input device 503. For example, an interaction with a GUI can comprise a click, a look, a selection, a grab, a view, a purchase, a bid, a swipe, a pinch, a reverse pinch, etc.

Network adapter 507 can be configured to connect system 500 to a computer network by wired communication (e.g., a wired network adapter) and/or wireless communication (e.g., a wireless network adapter). Network adapter 507 can be integrated into one or more chassis, circuit boards, and/or buses or be removable (e.g., via a PCI slot on a motherboard). For example, network adapter 507 can be implemented via one or more dedicated communication chips configured to receive various protocols of wired and/or wireless communications.

For simplicity and clarity of illustration, the drawing figures illustrate the general manner of construction, and descriptions and details of some features and techniques may be omitted to avoid unnecessarily obscuring the present disclosure. Additionally, elements in the drawing figures are not necessarily drawn to scale. For example, the dimensions of some of the elements in the figures may be exaggerated relative to other elements to help improve understanding of embodiments of the present disclosure. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments described herein are, for example, capable of operation in sequences other than those illustrated or otherwise described herein. Furthermore, the terms "include," and "have," and any variations thereof, are intended to cover a non-exclusive inclusion, such that a process, method, system, article, device, or apparatus that comprises a list of elements is not necessarily limited to those elements but may include other elements not expressly listed or inherent to such process, method, system, article, device, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the apparatus, methods, and/or articles of manufacture described herein are, for example, capable of operation in other orientations than those illustrated or otherwise described herein.

The terms "couple," "coupled," "couples," "coupling," and the like should be broadly understood and refer to connecting two or more elements mechanically and/or otherwise. Two or more electrical elements may be electrically coupled together, but not be mechanically or otherwise coupled together. Coupling may be for any length of time, e.g., permanent or semi-permanent or only for an instant. "Electrical coupling" and the like should be broadly understood and include electrical coupling of all types. The absence of the word "removably," "removable," and the like near the word "coupled," and the like does not mean that the coupling, etc. in question is or is not removable.

As defined herein, two or more elements are "integral" if they are comprised of the same piece of material. As defined herein, two or more elements are "non-integral" if each is comprised of a different piece of material.

As defined herein, "real-time" can, in some embodiments, be defined with respect to operations carried out as soon as practically possible upon occurrence of a triggering event. A triggering event can include receipt of data necessary to execute a task or to otherwise process information. Because of delays inherent in transmission and/or in computing speeds, the term "real time" encompasses operations that occur in "near" real time or somewhat delayed from a triggering event. In a number of embodiments, "real time" can mean real time less a time delay for processing (e.g., determining) and/or transmitting data. The particular time delay can vary depending on the type and/or amount of the data, the processing speeds of the hardware, the transmission capability of the communication hardware, the transmission distance, etc. However, in many embodiments, the time delay can be less than approximately one second, two seconds, five seconds, or ten seconds.

As defined herein, "approximately" can, in some embodiments, mean within plus or minus ten percent of the stated value. In other embodiments, "approximately" can mean within plus or minus five percent of the stated value. In further embodiments, "approximately" can mean within plus or minus three percent of the stated value. In yet other embodiments, "approximately" can mean within plus or minus one percent of the stated value.
Although systems and methods for context dependent invocation of predictive software application and data storage have been described with reference to specific embodiments, it will be understood by those skilled in the art that various changes may be made without departing from the scope of the invention, as defined by the claims. For the purpose of determining the extent of protection conferred by the claims, due account shall be taken of any element which is equivalent to an element specified in the claims.

## Claims

1. A computerized method for creating a targeted generative model for generating text relevant to a specific context, the method comprising:
capturing data from an event while the event is in progress;
after conclusion of the event, isolating the captured data from external data not relevant to the event;
analyzing, using natural language processing, the isolated data to determine one or more categories for the isolated data;
extracting one or more facts from the data based on relevance to the event and accuracy;
concatenating the one or more facts into knowledge units;
grouping related knowledge units based on the one or more determined categories;
generating a targeted generative model, wherein the targeted generative model is specific to the event, and wherein the targeted generative model is in a secure, isolated environment;
training the targeted generative model using the knowledge units, wherein the targeted generative model is trained and operates within the secure, isolated environment, restricted to event-specific data, and while leveraging generative model infrastructure;
receiving a user query related to the event;
generating, using the targeted generative model, a response to the user query; and
outputting the response to the user query.

2. The computerized method of claim 1, wherein the event comprises a virtual meeting, video call, phone call, teleconference, video conference, webinar, or other virtual event.

3. The computerized method of claim 1 or claim 2, wherein the data comprises one or more of stakeholder join/leave events, chat, audio, video, or shared screens.

4. The computerized method of any preceding claim, wherein capturing the data comprises deploying digital notepads, transcription services, or artificial intelligence-driven context recognition software to capture details from the event.

5. The computerized method of any preceding claim, wherein the categories comprise topics, decisions, and action items from the event.

6. The computerized method of any preceding claim, wherein the extracted facts are meeting facts or experiences.

7. The computerized method of any preceding claim, wherein the targeted generative model is organized within an event-based database and optionally wherein the user query is a natural language query.

8. The computerized method of any preceding claim, wherein the targeted generative model has enabled search functionality.

9. The computerized method of any preceding claim, wherein the user query requests specific details about events.

10. The computerized method of any preceding claim, wherein the targeted generative model is integrated within a meeting application.

11. The computerized method of any preceding claim, wherein data in the environment is restricted to designated secure zones such that there is no data transfer to or from publicly accessible generative model systems and optionally wherein dedicated servers and virtual machines in the environment are physically and logically segregated from other network resources.

12. The computerized method of claim 11, wherein the environment applies an encryption safeguard to secure communication channels or wherein the environment applies a rigorous access control systems to maintain standard data integrity and confidentiality.

13. A system comprising:
an electronic device comprising:
a meeting application configured to facilitate virtual communication between two or more people; and
a processor configured to:
capture data from an event in the meeting application while the event is in progress;
after conclusion of the event, isolating the captured data;
determining categories for the isolated data, wherein natural language processing is used to analyze the data;
extracting one or more facts from the data based on relevance and accuracy;
concatenating the one or more facts into knowledge units;
grouping related knowledge units;
generating a targeted generative model, wherein the targeted generative model is specific to the event, and wherein the targeted generative model is in a secure, isolated environment; and
training the targeted generative model using the knowledge units,
wherein the targeted generative model is trained and operates within the secure, isolated environment, restricted to event-specific data, and while leveraging generative model infrastructure.

14. The system of claim 13, wherein the targeted generative model is integrated within the meeting application and/or wherein data in the environment is restricted to designated secure zones such that there is no data transfer to or from publicly accessible generative model systems and/or wherein the processor is further configured to:
receive a user query related to the event;
generate, using the targeted generative model, a response to the user query; and
output the response to the user query.

15. A method for training a targeted generative model for generating text relevant to a specific context, the method comprising:
capturing data from an event;
after conclusion of the event, isolating the captured data;
determining categories for the isolated data;
extracting one or more facts from the data based on relevance and accuracy;
concatenating the one or more facts into knowledge units; and
training the targeted generative model using the knowledge units, wherein the targeted generative model is trained and operates within a secure, isolated environment, restricted to event-specific data, and while leveraging generative model infrastructure.
